# EUROPÄISCHE PATENTSCHRIFT

(11) **EP 1 439 405 B1**
(45) Veröffentlichungstag und Bekanntmachung des Hinweises auf die Patenterteilung: **13.02.2008**
(21) Anmeldenummer: 03029504.2
(22) Anmeldetag: 20.12.2003
(51) Int. Cl.: G01W 1/00, G01N 33/18

(54) **Verfahren und Vorrichtung zur Bestimmung von Parametern von Schnee oder Eis**
Method and device for determining parameters of snow or ice
Procédé et dispositif pour déterminer des paramètres de la neige ou de la glace

(30) Priorität: 20.01.2003 DE 10301789
(43) Veröffentlichungstag der Anmeldung: 21.07.2004
(73) Patentinhaber: Forschungszentrum Karlsruhe GmbH, 76133 Karlsruhe (DE)
(72) Erfinder: Brandelik, Alexander, Dr., 76227 Karlsruhe (DE); Hübner, Christof, Prof. Dr., 68535 Edingen (DE)
(74) Vertreter: Fitzner, Uwe

(56) Entgegenhaltungen:
- WO-A-99/30140
- M. SCNEEBELI ET AL.: "Measurement of density and wetness in snow using time-domain reflectometry" ANNALS OF GLACIOLOGY, Bd. 26, 1998, Seiten 69-72, XP008063425 ISSN: 0260-3055
- M. SCHNEEBELI AND J.B. JOHNSON: "A constant-speed penetrometer for high-resolution snow stratigraphy" ANNALS OF GLACIOLOGY, Bd. 26, 1998, Seiten 107-111, XP008063413 ISSN: 0260-3055
- DATABASE WPI Section PQ, Week 199321 Derwent Publications Ltd., London, GB; Class Q41, AN 1993-174123 XP002378208 -& SU 1 737 061 A1 (KHARK RAIL ENG INST) 30. Mai 1992 (1992-05-30)

## Beschreibung

Die Erfindung betrifft ein Verfahren und eine Vorrichtung zur Bestimmung von Parametern von Schnee oder Eis mittels eines LASERS.

Unter "Parametern" sind solche Parameter zu verstehen, die für hydrometerologische Berechnungen von Bedeutung sind. Beispielhaft seien hier genannt: Dicke der Schnee- oder Eisschicht, Schnee- oder Eisdichte, Schichtungsaufbau und Schnee- Wasser-Äquivalent. Die Kenntnis des Schnee-Wasser-Äquivalent ist insbesondere zur Vorhersage eines durch Lawinen- und Hochwassergefahrenpotentials von besonderer Bedeutung.

Ebenso ist es wichtig für die Vorhersage des Füllstandes der Reservoire von Wasserkraftwerken.

Zur Ermittlung der vorgenannten Parameter ist es bekannt, Kernlochbohrungen in Schnee- oder Eisschichten vorzutreiben und den Kern nach dessen Ziehung auf seine Beschaffenheit hin zu untersuchen. Zwar erlaubt dieses Verfahren die Durchführung umfangreicher Untersuchungen an den unterschiedlichen Schichtungen der Schnee- oder Eisschicht, in die die Kernlochbohrung niedergebracht wurde, nachteilig ist jedoch einerseits, dass die Anwendung des Verfahrens mit einem erheblichen technischen Aufwand verbunden ist, andererseits jedoch die zu untersuchende Schicht über ein relativ großes Volumen zerstört ist, was die Gefahr eines Kolabierens nach Ziehen des Kerns wesentlich erhöht.

Es besteht daher bereits seit längerem das Bestreben, Verfahren und Vorrichtungen zu entwickeln, die eine Untersuchung der Parameter von Eis und Schnee zumindest im Wesentlichen ohne Zerstörung der Schnee- oder Eisschichten ermöglichen. Es wurde in diesem Zusammenhang insbesondere vorgeschlagen, die gewünschten Parameter durch Messung der dieelektrischen Eigenschaften der Schnee- oder Eisschichten zu bestimmen (vgl. beispielsweise M. Schneebeli und C. Cloleou, Measurement of Density and Wetness in Snow, Using Time-Domain-Reflectomentry, Ann. Glaciology 26, 1977; und C. Mätzler, Microwave Permittivity of Dry Snow, IEEE Trans. on Geoscience and Remote Sensing, Vol. 34 No. 2, March 1966).

Bereits M. Schneebeli und C. Cloleou stellten fest, dass die Time-Domain Reflectometry (TDR) allein für die Erfassung der dieelektrischen Eigenschaften zur Bestimmung von Nass-Schnee-Parameter nicht geeignet ist.

Aus der WO 99/30140 ist ein Verfahren zur Bestimmung des volumetrischen Flüssigwasseranteils in der Dichte von Schnee bekannt. Hierbei wird eine Sonde installiert, welche aus mindestens drei zueinander parallelen elektrischen Leitern mit unterschiedlichen Abständen zueinander besteht.

Der Erfindung liegt daher die Aufgabe zu Grunde, ein Verfahren und eine zur Durchführung dieses Verfahrens geeignete Vorrichtung zu schaffen, mittels der die Bestimmung von Parametern von Schnee oder Eis im Wesentlichen zerstörungsfrei durchgeführt werden kann.

Diese Aufgabe wird durch ein Verfahren zur Bestimmung von Parametern von Schneeschichten oder Eisschichten für hydrometeorologische . Berechnungengelöst, bei dem die Parameter durch Vergleich der zum Aufschmelzen eines bestimmten Schnee- oder Eisvolumens aufzubringenden Schmelzenergie mit Kalibriermessungen ermittelt werden, wobei die Schmelzenergie mit einem LASER aufgebracht wird.

Ferner wird die Aufgabe dennoch eine Vorrichtung zur Bestimmung von Parametern von Schneeschichten oder Eisschichten für hydrometeorologische Berechnungen mit einem LASER (1) gelöst, dessen abgegebene Energie erfassbar ist, und mit Mitteln zur Bestimmung des Schnee- oder Eisvolumens, dass aufgrund der abgegebenen LASER-Energie aufgeschmolzen wurde.

Bei dem erfindungsgemäßen Verfahren werden die Parameter durch Vergleich mit der zum Aufschmelzen eines bestimmten Schnee- oder Eisvolumens aufzubringenden Schmelzenergie ermittelt, wobei dies Schmelzenergie mit einem LASER aufgebracht wird.

Die Messung der aufzubringenden Schmelzenergie kann vorzugsweise dadurch erfolgen, dass die durch den LASER zur Erzeugung des Aufschmelzvorgangs aufgebrachte Energie ermittelt wird.

Die Abhängigkeit des zu bestimmenden Parameters in Abhängigkeit der Tiefe der zu untersuchenden Schnee- oder Eisschicht kann dadurch erfolgen, dass in einer Schrittfolge von einer Oberfläche ausgehend zu größeren Tiefen aufgeschmolzen und bei jedem Schritt das geschmolzene Volumen der hierfür benötigen Schmelzenergie zugeordnet wird. Es erfolgt mit anderen Worten ein wiederholtes Aufbringen einer vom LASER emitierten Energiemenge, die aufgrund des hierdurch bedingten Schmelzvorgangs zu einem Vortrieb einer durch den Schmelzvorgang bewirkten Lochung durch die Schnee- oder Eisschicht führt.

Die zu ermittelnden Parameter können zahlenmäßig dadurch bestimmt werden, dass die durch den LASER zum Aufschmelzen eines bestimmten Schnee- oder Eisvolumens aufgebrachte Energie mit zuvor durchgeführten Kalibriermessungen verglichen wird.

Diese Kalibriermessungen berücksichtigen vorzugsweise die Eigenschaften des verwendeten LASERs und des Schnee- oder Eisvolumens. Unter Eigenschaften des LASERs sind insbesondere seine Wellenlänge, seine Leistung und die Fläche, auf der der LASER auf die Schnee- oder Eisoberfläche einwirkt, zu verstehen. Mit Eigenschaften des Schnee- oder Eisvolumens sind insbesondere die Schnee- oder Eisdichte sowie die Temperatur gemeint. Die Kalibriermessungen werden demnach vorzugsweise mit unterschiedlich dichten Schneeproben bei ggfs. verschiedenen Temperaturen durchgeführt.

In einer bevorzugten, konkreten Ausgestaltung des Verfahrens wird die Schmelzenergie durch einen für eine bestimmte, vorgegebene Zeitdauer auf den Schnee oder das Eis einwirkenden LASER-Strahl aufgebracht und das Volumen des während dieser Zeitdauer durch den Aufschmelzvorgang in dem Schnee oder Eis entstehenden Loches ermittelt.

Die Vermessung des Lochvolumens erfolgt vorzugsweise mittels eines LASER-Vermessungsgerätes.

Umfasst Letzteres ein LASER-Distanzmessgerät, so kann die Eindringtiefe des durch wiederholte LASER-Einstrahlung durch die Schnee- oder Eisschicht vorgetriebenen Loches zuverlässig bestimmt werden.

Versuche haben gezeigt, dass die Schmelzenergie besonders wirksam mittels eines CO₂-LASERs aufgebracht werden kann. Da die Ankopplung sich bei Verwendung dieses LASERs als besonders wirksam erwiesen hat, können die Messzeiten auf einen niedrigen Wert reduziert werden.

Demgegenüber ist es wichtig, dass der für das Laser-Vermessungsgerät in einem LASER-Distanzmessgerät verwendete LASER möglichst schlecht an die zu untersuchende Schnee- oder Eisschicht ankoppelt, da dies durch ein ungewolltes Aufschmelzen zu Fehlmessungen führen würde. Versuche haben gezeigt, dass ein HeNe-LASER eine Wellenlänge von 635 nm mit einer Leistung, die zumindest eine Größenordnung niedriger als diejenige des CO₂-LASERs ist, gute Ergebnisse liefert.

Eine insbesondere zur Durchführung des erfindungsgemäßen Verfahrens zur Bestimmung von Parametern von Eis und Schnee geeignete Vorrichtung umfasst einen LASER, dessen abgegebene Energie erfassbar ist, und Mittel zur Bestimmung des Schnee- oder Eisvolumens, dass aufgrund der abgegebenen LASER-Energie aufgeschmolzen wurde.

Bei dem LASER handelt es sich vorzugsweise um einen CO₂-LASER, der vorzugsweise eine Leistung von 1 - 10 Watt, besonders bevorzugt eine Leistung von 5 Watt aufweist.

Die Mittel zur Bestimmung des Schnee- oder Eisvolumens, das aufgrund der abgegebenen LASER-Energie aufgeschmolzen wurde, umfassen vorzugsweise ein LASER-Distanzmessgerät einer Bauart und Funktionsweise, die aus dem Stand der Technik bekannt ist. Beispielhaft seien hier erwähnt:
- Die Distanzmessung mittels eines modulierten LASER-Strahls. Bei diesem Verfahren wird der modulierte, reflektierte Strahl auf den Eingang eines Phasenmessgeräts und ein Teil des modulierten Strahls auf direktem Wege, d.h. ohne Objektberührung auf einen zweiten Eingang des Phasenmessgeräts geführt. Der Phasenunterschied der beiden Modulationssignale ist dann ein Maß für den Wegunterschied zwischen den zwei Strahlstrecken.
- Der Messstrahl wird pulsmoduliert oder mit einem Marker (in seiner Amplitude) versehen. In diesem Fall wird an Stelle eines Phasenmessgeräts ein Zeitmessgerät genutzt. Der Zeitunterschied zwischen reflektiertem und dem auf dem direkten Weg geführten Signal ist dann ein Maß für den Abstand.
- Bei der sog. Triangolationsmessung bilden der LASER-Generator, das Objekt und der Strahlempfänger, der den von dem Objekt reflektierten Strahl aufnimmt, ein Dreieck mit einem Abstand zwischen Generator und Empfänger. Für die Messung wird ein modulierter oder ein pulsmodulierter LASER eingesetzt. Der Vorteil dieser Triangolationsmessung ist, dass die Trennung des reflektierten Strahls eindeutiger ist, er ist für Nebenreflektionen weitgehend unempfindlich. Der Nachteil ist, dass der reflektierte Strahl ohne Hinderung den Empfänger erreichen muss, wodurch der Platzbedarf für diese Art der Messung vergleichsweise groß ist.

Es können theoretisch alle drei oben genannten Methoden auch mit dem zum Aufschmelzen verwendeten LASERs durchgeführt werden. Da jedoch ein LASER mit einer guten Ankopplung, d.h. guter Energiedeposition in Schnee oder Eis sich nur langsam modulieren lässt, und weil dessen Detektoren auch nur langsamen Änderungen folgen können, ist es sehr vorteilhaft, für die Abstandsmessung einen anderen, schnell modulierbaren und schnell detektierbaren LASER zu verwenden. Versuche haben gezeigt, dass ein HeNe-LASER hierfür besonders gut geeignet ist. Zudem kann dieser LASER mit einer um zumindest eine Größenordnung geringeren Leistung betrieben werden, wodurch weitestgehend vermieden werden kann, dass während des Distanzmessvorganges ein weiteres Aufschmelzen des zu untersuchenden Schnees oder Eises erfolgt.

Im Folgenden soll der prinzipielle Aufbau dreier Ausführungsformen einer zur Durchführung des erfindungsgemäßen Verfahrens geeigneten Vorrichtungen anhand von Fig. 1 bis 4 sowie einer Versuchsdurchführung, bei der das erfindungsgemäße Verfahren Anwendung fand, erläutert werden. Es zeigen:
Fig. 1 - schematisch ein erstes Ausführungsbeispiel einer erfindungsgemäßen Vorrichtung während des Energieeintrags in eine Schnee- oder Eisschicht;
Fig. 2 - dasselbe Ausführungsbeispiel während der Bestimmung des durch den Schmelzvorgang hervorgerufenen Schmelzvolumens;
Fig. 3 - den prinzipiellen Aufbau eines zweiten Ausführungsbeispiels der erfindungsgemäßen Vorrichtung;
Fig. 4 - den prinzipiellen Aufbau eines dritten Ausführungsbeispiels der erfindungsgemäßen Vorrichtung, sowie
Fig. 5 - die Funktionsweise eines Ausführungsbeispiels einer erfindungsgemäßen Vorrichtung anhand eines Blockschaltbildes.

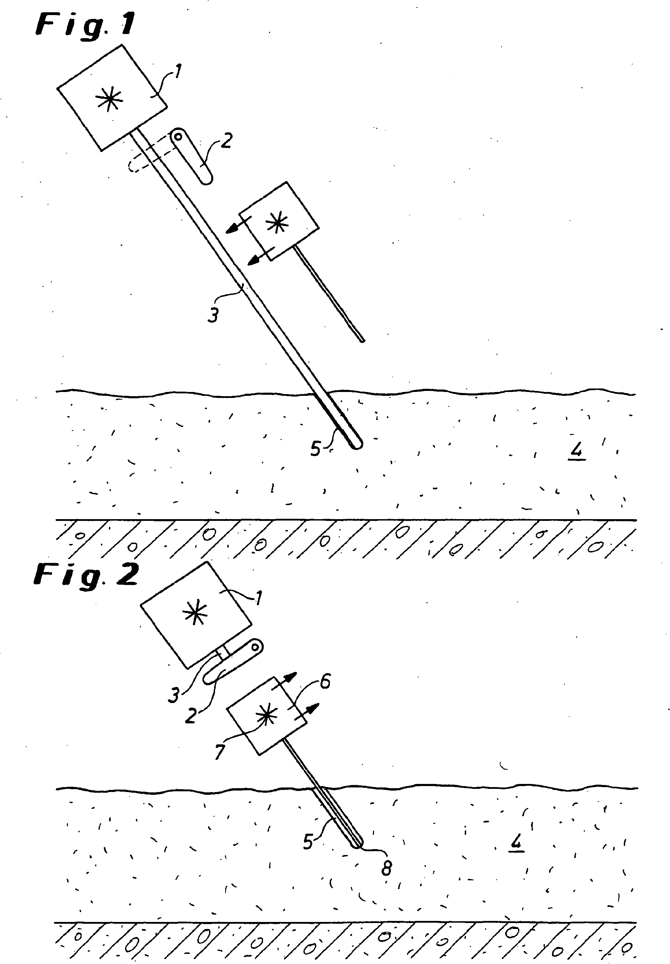

Das in den Fig. 1 und 2 dargestellte Ausführungsbeispiel umfasst einen CO₂-LASER 1, der in einzelnen Pulsen Zeit intermittierend betrieben werden und dessen während eines Pulses abgegebene Energie erfasst werden kann. Die Zeitdauer eines Pulses ist mittels einer Blende 2 einstellbar, die wahlweise in den Strahlengang des LASERs hinein und aus diesem heraus verschwenkbar angeordnet ist.

Der von dem LASER 1 emitierte Strahl 3 weist einen Durchmesser von 5 mm auf. Bei dem in Fig. 1 dargestellten Betriebszustand ist die Blende 2 aus dem LASER-Strahl herausverschwenkt, so dass dieser auf die Schnee- oder Eis-Schicht 4 trifft und in diese ein Loch 5 durch Energieübertrag einschmilzt, dessen Tiefe von der Dauer eines Pulses abhängt.

Nach der gewünschten Einstrahlungsdauer des CO₂-LASERs 1 in die Schnee- oder Eisschicht 4 wird die Blende 2 in den Strahlengang zurückverschwenkt, wie dies in Fig. 2 schematisch dargestellt ist. Anschließend wird ein LASER-Distanzmessgerät 6 in den Strahlengang geschoben, welches die Distanz zwischen der LASER-Quelle 7 und der Sohle 8 des Loches 5 beispielsweise nach dem oben beschriebenen Modulationsverfahren, das in der Zeichnung nicht näher dargestellt ist, mißt. Durch das so erfasste Fortschreiten der Sohle 8 der Lochung 5 in Abhängigkeit der Gesamtdauer des LASER-Pulses bzw. der mittels des LASERs eingestrahlten Gesamtenergie läßt sich das Volumen der aufgeschmolzenen Schnee- oder Eismenge bestimmen.

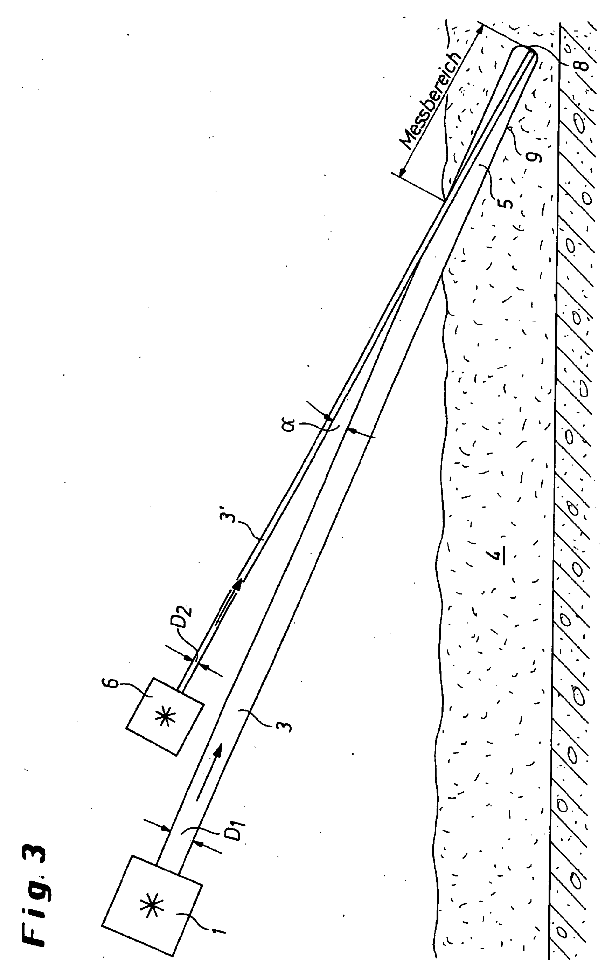

Ein zweites Ausführungsbeispiel einer erfindungsgemäßen Vorrichtung ist in Fig. 3 dargestellt. Der Unterschied zum vorbeschriebenen Ausführungsbeispiel besteht im Wesentlichen darin, dass das LASER-Distanzmessgerät 6 ortsfest gegenüber dem CO₂-LASER 1 angeordnet ist. Die von dem CO₂-LASER 1 und dem LASER-Distanzmessgerät 6 emitierten LASER-Strahlen 3, 3 sind derart justiert, dass sie sich in einem spitzen Winkel α schneiden, derart, dass sie beide auf die Sohle 8 des Loches 5 auftreffen.

Voraussetzung dafür, eine derartige Anordnung wählen zu können, ist es, dass der Durchmesser des von dem CO₂-LASERs 1 emitierte Strahl 3 erheblich größer ist als der LASER-Strahl 3, der von dem LASER-Distanzmessgerät 6 emitiert wird, wie dies aus Fig. 3 sinnfällig wird. Ein zu kleiner Durchmesserunterschied und/oder ein zu großer Winkel führen dazu, dass der LASER-Strahl 3 nicht mehr auf der Sohle 8 des Loches 5 auftreffen würde, sondern auf die seitliche Lochungswandung 9, wodurch das Messergebnis unbrauchbar würde.

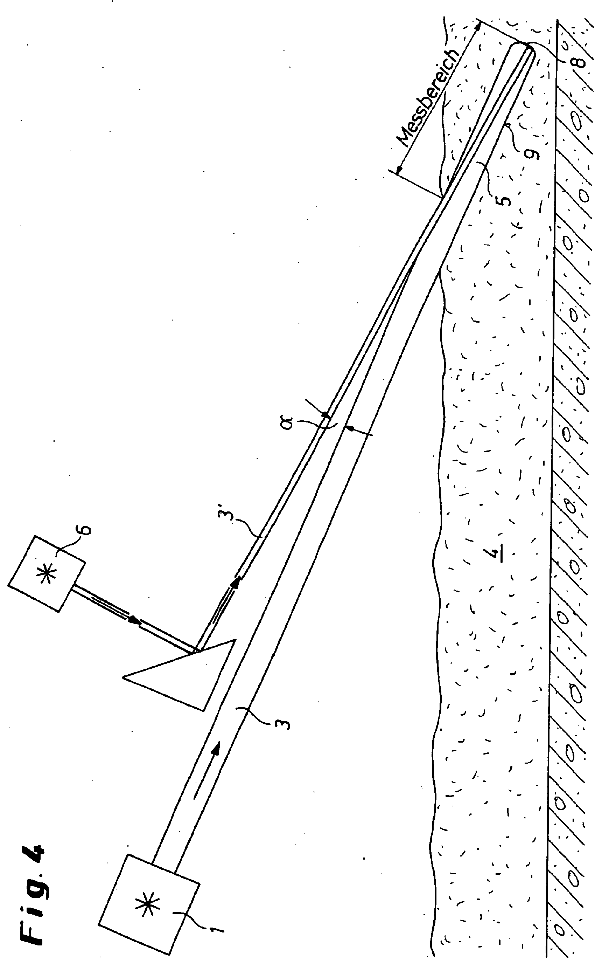

Die dritte, in Fig. 4 dargestellte Ausführungsform der erfindungsgemäßen Vorrichtung unterscheidet sich von derjenigen in Fig. 3 durch einen seitlich des von dem CO₂-LASERs 1 emitierten Strahles 3 in einem Winkel α von 45° zu diesem angeordnetem Spiegel 10, über den der Strahl 3 des LASER-Distanzmessgerät 6 um 90° abgelenkt wird. Durch diese Maßnahme kann im Vergleich zur Ausführungsform gemäß Fig. 3 der Winkel verkleinert werden, wodurch die maximal erzielbare Lochtiefe T, die dadurch begrenzt ist, dass bei Überschreiten derselben der Strahl 3 auf die Seitenwandung 9 des Loches trifft, vergrößert ist.

In den in der Zeichnung dargestellten Fällen, in denen das Loch von der Oberfläche der Schnee- oder Eisdecke zur Sohle 8 hin nach unten geneigt ist, ist es für eine einwandfreie Messung wünschenswert, dass durch den Schmelzvorgang entstandenes Wasser aus dem Loch 5 abfließt. Weist die Schnee- oder Eisschicht eine ausreichende Porosität auf, so erfolgt dies selbsttätig. Im Falle massiver Eisschichten kann es erforderlich sein, das Schmelzwasser abzusaugen, oder der von dem CO₂-LASER 1 emitierte Stahl 3 wird - soweit möglich - schräg nach oben weisend beispielsweise in eine auf senkrechte Richtungskomponente aufweisende Schichtwandung gelenkt, so dass ein zur Sohle hin ansteigendes Loch entsteht, aus dem das Schmelzwasser selbsttätig abfließt.

Im Folgenden soll die Durchführung des erfindungsgemäßen Verfahrens an einem Labor- und an einem Freilandversuch erläutert werden.

Bei dem Laborversuch wurde mit einem CO₂-LASER einer Leistung von 5 Watt, der einen LASER-Strahl eines Durchmessers von 5 mm emitiert, ein Eisblock beleuchtet. Die Energiedeposition war so gut, dass ein zylindrisches Loch von ca. 5,5 mm Durchmesser und einer Tiefe von 20 mm innerhalb von weniger als 4 Sekunden hergestellt wurde.

Die Tiefenmessung erfolgte einerseits mechanisch mittels eines Maßstabs, andererseits mittels eines LASER-Distanzmessgeräts Typ DLE 30 plus der ROBERT BOSCH GmbH. Dieses LASER-Distanzmessgerät verwendet einen LASER-Strahl mit einer Wellenlänge von 635 nm (HeNe-LASER), der einen Durchmesser von 5 mm aufweist. In dessen Strahlengang wurde ein Kollimator mit einer Bohrung von 1 mm Durchmesser und 50 mm Länge eingefügt, um zu vermeiden, dass der Strahl die seitliche Lochungswandung berührt. Die Einleitung des von dem CO₂-LASERs emitierten LASER-Strahls erfolgte wiederholt für jeweils eine Dauer von ca. 4 Sekunden, bis ein Loch einer Tiefe von ca. 16 cm entstanden war.

Es wurde festgestellt, dass sich der Fortschritt der Lochtiefe pro Zeiteinheit nicht mit zunehmender Lochtiefe ändert. Ferner wurde gefunden, dass auch der an die Oberfläche des Eisblocks angrenzende Bereich des Lochs bis auf einen leicht trichterförmigen Teil von ca. 12 bis 15 mm Länge eine sehr gleichmäßige Seitenwandung aufweist. Das Loch ist somit über nahezu seine gesamte Länge zylindrisch mit einem Durchmesser von ca. 5,5 mm.

Die nach jedem Beleuchtungsschritt mit dem CO₂-LASER mit dem LASER-Distanzmessgerät ermittelte Lochtiefe war stets 18 mm größer als das Ergebnis der Messung mit dem Maßstab. Eine plausible Erklärung dieser Diskrepanz ist, dass der von dem LASER-Distanzmessgerät emitierte Strahl über die Lochsohle hinaus in das Eis hineinreicht. Die Differenz blieb über sämtliche Messungen konstant und wurde daher als für das Verwendete als charakterisch angesehen.

Bei dem auf einem Schneefeld durchgeführten Freilandversuch wurde die Wiederholbarkeit und die Absolutgenauigkeit der Lochtiefenmessung im frisch-trockenen und im teilweise verharschten Schnee mit demselben LASER-Distanzmessgerät durchgeführt. Zudem wurde derselbe Kollimator wie bei dem Laborversuch verwendet. Die Abstandsmessungen wurden sowohl mit dem LASER-Distanzmessgerät und einer Schneewand, als auch zwischen diesem Messgerät und dem Boden eines mechanisch in den Schnee gebohrten Lochs durchgeführt. Unabhängig der Lochtiefe war der Mehrabstand, der mit dem LASER-Distanzmessgerät gegenüber der Messung mit dem Maßstab ermittelt wurde, 15 mm größer, unabhängig, ob es sich um den frisch-trockenen Schnee, oder um einen bis in eine Tiefe von ca. 1 cm verharschten Schnee handelte. Der gemessene Mehrabstand wird auf die Transmissions- und Reflektionsfähigkeit des Schnees zurückgeführt.

Aufgrund dieser Versuchsergebnisse wurde beschlossen,
- dass frisch-trockener Schnee und Eis die zwei extremen Formen des festen Zustands des Wassers bilden. Alle anderen (Schnee) Formen liegen innerhalb dieser Extrema.
- dass mit einem CO₂-LASER mit einer guten Energiedeposition, d.h., sehr effektiv Löcher in Schnee- oder Eismassen eingebracht werden können.
- dass mit einem LASER-Distanzmessgerät des verwendeten Typs die Lochtiefe in Schnee- oder Eisschichten auf ca. 3 mm Genauigkeit gemessen werden kann. Letzteres ergibt sich daraus, dass der gemessene Mehrabstand im Eis 18 mm, hingegen in Schnee 15 mm beträgt. Diese Genauigkeit ist unerwartet hoch. Da zudem nicht senkrecht gemessen werden muss, sondern auch unter einem schrägen Winkel ein Loch niedergebracht werden kann, lassen sich bezogen auf die senkrechte Tiefe nochmals höhere Genauigkeiten erzielen.

Schließlich sei noch erwähnt, dass zur Einbringung des Lochs nicht die Verwendung eines CO₂-LASERs zwingend ist. Es sind auch LASER mit anderen Wellenlängen denkbar, die eine ausreichende Energiedeposition sicherstellen. Wesentlich ist lediglich, dass der Durchmesser des mit dem LASER vorgetriebenen Loches so klein ist, dass es nicht durch die Eigenlast der Schnee- oder Eisdecke während der Messung kollabiert.

Ferner ist es vorteilhaft, die Temperatur des Schnees oder des Eises, in den bzw. in das Loch vorgetrieben wird, zu erfassen. Es kann dann zur der Schmelzwärme der Wärmebedarf für das Erwärmen des Schnees bis zum Schmelzpunkt korrigierend berücksichtigt werden. Insbesondere sollte die Schneetemperatur sowohl oberhalb, als auch unterhalb des Loches gemessen werden, da Schneedecken einen erheblichen Temperaturgradient aufweisen können.

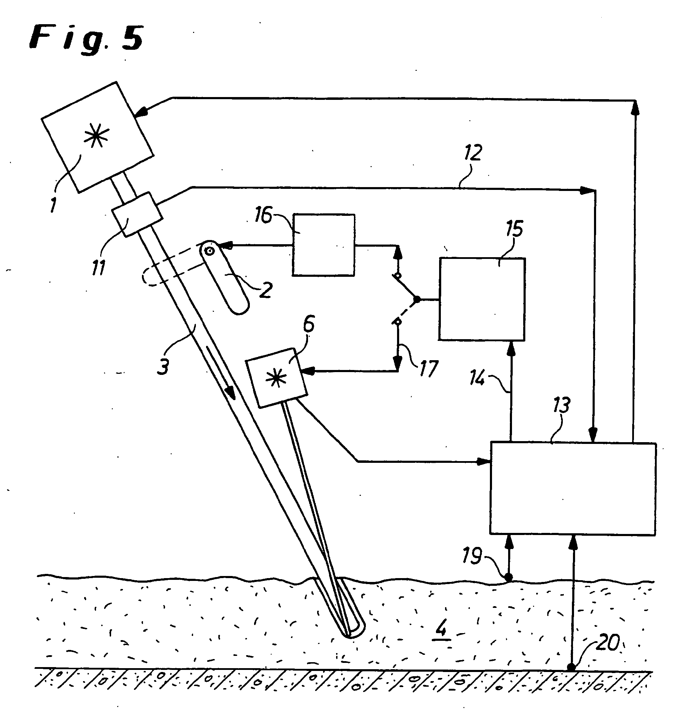

Die Funktionsweise eines Ausführungsbeispiels einer erfindungsgemäßen Vorrichtung soll nun anhand von Fig. 5 erläutert werden.

In dem Strahl 3 des CO₂- LASERs 1 ist ein Strahlleistungs-Messgerät 11 eingeschaltet, das gemessene Strahlleistungen über eine Datenleitung 12 einem Rechner 13 übermittelt. Der Rechner 13 steuert über eine Signalleitung 14 einen Timer 15, der über eine Betätigungseinrichtung 16 wahlweise durch Öffnen der Blende 2 (in Fig. 5 durchgezogen dargestellt) den Strahlengang des Strahls 3 freigibt oder durch Schließen der Blende 2 (in Fig. 5 gestrichelt dargestellt) unterbricht. Bei geschlossener Blende 2 aktiviert der Timer 15 über eine Signalleitung 17 das LASER-Distanzmessgerät 6. Die gemessene Distanz wird dem Rechner 13 über eine Datenleitung 18 zugeleitet.

Der Rechner 13 projiziert um die erfassten Daten (Produkt aus Strahlleistung und Zeit; Distanz und Lochtiefe) in eine gespeicherte Kalibrierkurve und übermittelt das so gewonnene Ergebnis an ein in der Zeichnung nicht dargestelltes Anzeige- oder Speichergerät.

Zusätzlich ist der Rechner noch mit einem Oberflächentemperatur - und mit einem Bodentemperaturmessgerät 19, 20 verbunden, um so - wie oben erwähnt - Temperaturgradienten in der Schicht berücksichtigen zu können.

### Bezugszeichen-Liste:

- 1.: CO₂-LASER
- 2.: Blende
- 3.: Strahl
- 4.: Schnee- oder Eisschicht
- 5.: Loch
- 6.: LASER-Distanzmessgerät
- 7.: LASER-Quelle
- 8.: Sohle
- 9.: Seitenumwandung
- 10.: Spiegel
- 11.: Strahlleistungs-Messgerät
- 12.: Datenleitung
- 13.: Rechner
- 14.: Signalleitung
- 15.: Timer
- 16.: Betätigungseinrichtung
- 17.: Signalleitung
- 18.: Datenleitung
- 19.: Oberflächentemperaturmessgerät
- 20.: Bodentemperaturmessgerät

## Patentansprüche

1. Verfahren zur Bestimmung von Parametern von Schneeschichten oder Eisschichten für hydrometeorologische Berechnungen bei dem die Parameter durch Vergleich der zum Aufschmelzen eines bestimmten Schnee- oder Eisvolumens aufzubringenden Schmelzenergie mit Kalibriermessungen ermittelt werden, wobei die Schmelzenergie mit einem LASER aufgebracht wird.

2. Verfahren nach Anspruch 1, **dadurch gekennzeichnet, dass** die aufzubringende Schmelzenergie durch Erfassung der durch den LASER aufgebrachten Energie ermittelt wird.

3. Verfahren nach Anspruch 1 oder 2, **dadurch gekennzeichnet, dass** in einer Schrittfolge Schnee oder Eis von einer Oberfläche der Schicht ausgehend zu größeren Tiefen aufgeschmolzen und bei jedem Schritt das geschmolzene Volumen der hierfür benötigten Schmelzenergie zugeordnet wird.

4. Verfahren nach Anspruch 3, **dadurch gekennzeichnet, dass** die Kalibriermessungen die Eigenschaften des verwendeten LASERs und des Schnee- oder Eisvolumens berücksichtigen.

5. Verfahren nach Anspruch 3 oder 4, **dadurch gekennzeichnet, dass** die Kalibriermessungen mit unterschiedlichen dichten Schneeproben durchgeführt werden.

6. Verfahren nach einem der Ansprüche 1 bis 5, **dadurch gekennzeichnet, dass** die Schmelzenergie durch einen für eine bestimmte Zeitdauer auf die Schneeschicht oder Eisschicht einwirkenden LASER-Strahl aufgebracht und das Volumen des während dieser Zeitdauer in dem Schnee oder Eis entstandenen Loches ermittelt wird.

7. Verfahren nach Anspruch 6, **dadurch gekennzeichnet, dass** die Vermessung des Lochvolumens mittels eines LASER-Vermessungsgerätes erfolgt.

8. Verfahren nach Anspruch 7, **dadurch gekennzeichnet, dass** das LASER-Vermessungsgerät ein LASER-Distanzmessgerät umfasst.

9. Verfahren nach einem der Ansprüche 1 bis 8, **dadurch gekennzeichnet, dass** die Schmelzenergie mittels eines CO₂-LASERs aufgebracht wird.

10. Verfahren nach einem der Ansprüche 1 bis 9, **dadurch gekennzeichnet, dass** die Vermessung mittels eines HeNe-LASERs erfolgt.

11. Verfahren nach Anspruch 10, **dadurch gekennzeichnet, dass** die Flächenleistung des HeNe-LASERs zumindest um eine Größenordnung geringer ist als die Flächenleistung des CO₂-LASERs.

12. Vorrichtung zur Bestimmung von Parametern von Schneeschichten oder Eisschichten für hydrometeorologische Berechnungen nach einem Verfahren nach einem der Ansprüche 1 bis 11, mit einem LASER (1) dessen abgegebene Energie erfassbar ist, und mit Mitteln zur Bestimmung des Schnee- oder Eisvolumens, dass aufgrund der abgegebenen LASER-Energie aufgeschmolzen wurde.

13. Vorrichtung nach Anspruch 12, **dadurch gekennzeichnet, dass** der LASER ein CO₂-LASER ist.

14. Vorrichtung nach Anspruch 12 oder 13, **dadurch gekennzeichnet, dass** der LASER eine Leistung von 1 bis 10 Watt aufweist.

15. Vorrichtung nach Anspruch 14, **dadurch gekennzeichnet, dass** der LASER eine Leistung von 5 Watt aufweist.

16. Vorrichtung nach einem der Ansprüche 14 bis 15, **dadurch gekennzeichnet, dass** die Mittel zur Bestimmung des Schnee- oder Eisvolumens, dass aufgrund der abgegebenen LASER-Energie aufgeschmolzen wurde, ein LASER-Distanzmessgerät (6) umfasst.

17. Vorrichtung nach Anspruch 16, **dadurch gekennzeichnet, dass** das LASER-Distanzmessgerät (6) einen HeNe-LASER aufweist.

## Claims

1. Method for determining parameters of snow layers or ice layers for hydrometeorological calculations, in which the parameters are determined by comparing the melting energy to be applied to melt a particular volume of snow or ice with calibration measurements, the melting energy being applied using a laser.

2. Method according to Claim 1, **characterized in that** the melting energy to be applied is determined by recording the energy applied by the laser.

3. Method according to Claim 1 or 2, **characterized in that**, in a sequence of steps, snow or ice is melted to a greater depth starting from a surface of the layer and with each step the melted volume is associated with the melting energy required therefor.

4. Method according to Claim 3, **characterized in that** the calibration measurements take account of the characteristics of the laser used and of the snow or ice volume.

5. Method according to Claim 3 or 4, **characterized in that** the calibration measurements are performed with snow samples of different densities.

6. Method according to one of Claims 1 to 5, **characterized in that** the melting energy is applied by a laser beam acting for a specific period on the snow layer or ice layer and the volume of the hole arising in the snow or ice during this period is determined.

7. Method according to Claim 6, **characterized in that** the hole volume is measured using a laser measuring instrument.

8. Method according to Claim 7, **characterized in that** the laser measuring instrument comprises a laser distance meter.

9. Method according to one of Claims 1 to 8, **characterized in that** the melting energy is applied by means of a CO₂ laser.

10. Method according to one of Claims 1 to 9, **characterized in that** measuring takes place using an HeNe laser.

11. Method according to Claim 10, **characterized in that** the power per unit area of the HeNe laser is less by at least one order of magnitude than the power per unit area of the CO₂ laser.

12. Device for determining parameters of snow layers or ice layers for hydrometeorological calculations using a method according to one of Claims 1 to 11, having a laser (1), whose output energy may be recorded, and having means for determining the snow or ice volume which has been melted as a result of the output laser energy.

13. Device according to Claim 12, **characterized in that** the laser is a CO₂ laser.

14. Device according to Claim 12 or 13, **characterized in that** the laser has a power of from 1 to 10 watts.

15. Device according to Claim 14, **characterized in that** the laser has a power of 5 watts.

16. Device according to one of Claims 14 to 15, **characterized in that** the means for determining the snow or ice volume which has been melted as a result of the output laser energy comprises a laser distance meter (6).

17. Device according to Claim 16, **characterized in that** the laser distance meter (6) comprises an HeNe laser.

## Revendications

1. Procédé pour déterminer les paramètres de couches de neige ou de couches de glace pour des calculs hydrométéorologiques avec lequel les paramètres sont déterminés par une comparaison de l'énergie de fusion à appliquer pour faire fondre un volume de neige ou de glace donné avec des mesures de calibrage, l'énergie de fusion étant appliquée avec un laser.

2. Procédé selon la revendication 1, **caractérisé en ce que** l'énergie de fusion à appliquer est déterminée en détectant l'énergie appliquée par le laser.

3. Procédé selon la revendication 1 ou 2, **caractérisé en ce que** la neige ou la glace est fondue dans une série d'étapes en partant d'une surface de la couche vers des profondeurs plus grandes et, à chaque étape, le volume fondu est associé à l'énergie de fusion nécessaire à cet effet.

4. Procédé selon la revendication 3, **caractérisé en ce que** les mesures de calibrage tiennent compte des propriétés du laser utilisé et du volume de neige ou de glace.

5. Procédé selon la revendication 3 ou 4, **caractérisé en ce que** les mesures de calibrage sont effectuées avec des échantillons de neige de différentes épaisseurs.

6. Procédé selon l'une des revendications 1 à 5, **caractérisé en ce que** l'énergie de fusion est appliquée par un rayon laser qui agit sur la couche de neige ou sur la couche de glace pendant une durée donnée et le volume du trou produit pendant cette durée dans la neige ou la glace est déterminé.

7. Procédé selon la revendication 6, **caractérisé en ce que** la mesure du volume du trou s'effectue au moyen d'un appareil de mesure à laser.

8. Procédé selon la revendication 7, **caractérisé en ce que** l'appareil de mesure à laser comprend un appareil de mesure de distance à laser.

9. Procédé selon l'une des revendications 1 à 8, **caractérisé en ce que** l'énergie de fusion est appliquée au moyen d'un laser à CO₂.

10. Procédé selon l'une des revendications 1 à 9, **caractérisé en ce que** la mesure s'effectue au moyen d'un laser à HeNe.

11. Procédé selon la revendication 10, **caractérisé en ce que** la puissance superficielle du laser à HeNe est inférieure d'au moins un ordre de grandeur à la puissance superficielle du laser à CO₂.

12. Dispositif pour déterminer les paramètres des couches de neige ou des couches de glace pour les calculs hydrométéorologiques d'après un procédé selon l'une des revendications 1 à 11, comprenant un laser (1) dont l'énergie délivrée peut être détectée et comprenant des moyens pour déterminer le volume de neige ou de glace qui a été fondu du fait de l'énergie laser délivrée.

13. Dispositif selon la revendication 12, **caractérisé en ce que** le laser est un laser CO₂.

14. Dispositif selon la revendication 12 ou 13, **caractérisé en ce que** le laser présente une puissance de 1 à 10 watts.

15. Dispositif selon la revendication 14, **caractérisé en ce que** le laser présente une puissance de 5 watts.

16. Dispositif selon l'une des revendications 14 à 15, **caractérisé en ce que** les moyens de détermination du volume de neige ou de glace qui a été fondu du fait de l'énergie laser délivrée comprennent un appareil de mesure de distance à laser (6).

17. Dispositif selon la revendication 16, **caractérisé en ce que** l'appareil de mesure de distance à laser (6) présente un laser à HeNe.
